# EUROPÄISCHE PATENTSCHRIFT

(11) **EP 1 749 956 B1**
(45) Veröffentlichungstag und Bekanntmachung des Hinweises auf die Patenterteilung: **27.08.2008**
(21) Anmeldenummer: 06014434.2
(22) Anmeldetag: 12.07.2006
(51) Int. Cl.: E05B 65/12, E05B 65/36, B60Q 1/00, B60R 25/10, G07C 9/00

(54) **Kraftfahrzeug mit einem Steuergerät**
Vehicle with a control device
Véhicule avec un dispositif de commande

(30) Priorität: 01.08.2005 DE 102005035993
(43) Veröffentlichungstag der Anmeldung: 07.02.2007
(73) Patentinhaber: GM Global Technology Operations, Inc., Detroit, MI 48265-3000 (US)
(72) Erfinder: Bald, Heiko, 64397 Modautal (DE); Böhme, Aiko, 55218 Ingelheim (DE)
(74) Vertreter: Daniel, Ulrich W.P.

(56) Entgegenhaltungen:
- DE-A1- 10 038 359
- DE-A1- 10 112 027
- DE-A1- 10 339 293
- DE-A1- 19 501 777
- DE-A1- 19 745 617
- US-A- 6 049 268

## Beschreibung

Die Erfindung bezieht sich auf ein Verfahren zum Betreiben eines Kraftfahrzeugs mit einem Steuergerät zur Erzeugung und Einrichtungen zur Abgabe optischer und/oder akustischer Signale, wobei bei einem abgestellten Kraftfahrzeug von dem Steuergerät ein Bestätigungssignal erzeugt wird.

Die den nächstliegenden Stand der Technik bildende US-A-6 049 268 offenbart eine Fernbedienung für ein Kraftfahrzeug sowie ein damit bedienbares Fahrzeugsicherheits- und Bequemlichkeitssystem und damit verbundene Methoden, wobei hörbare Bestätigungssignale für einen Benutzer bereitgestellt werden, während die aufdringliche Wirkung für andere reduziert ist. Das hörbare Signal ist ein Bestätigungssignal für einen durchgeführten Vorgang und kann als Antwort auf ein Signal von der Fernbedienung ausgegeben werden. Üblicherweise werden mit der Fernbedienung Signale für eine Zentralverriegelung erzeugt.

Aus der Praxis der Kraftfahrzeugtechnik ist es bekannt, besonders bei hochwertigen Kraftfahrzeugen eine funk- oder infrarotgesteuerte Fernbedienung vorzusehen, so dass ein Nutzer des Kraftfahrzeugs nach dem Verlassen und dem Schließen einer Tür sich bereits vom Kraftfahrzeug entfernen und dieses dennoch verriegeln kann. Das Verriegeln wird üblicherweise mit einem kurzen Aufblinken der Fahrtrichtungsanzeiger sowie gegebenenfalls mit einem akustischen Signal bestätigt. Hierbei werden auch die Verriegelungsknöpfe an den Türen und/oder Klappen in ihre eingezogene Position verfahren. Zur Ansteuerung der Zentralverriegelung sowie aller anderen Komponenten des Kraftfahrzeugs dient ein Steuergerät, das beispielsweise über in der Kraftfahrzeugtechnik bekannte Datenbus-Architekturen mit allen Komponenten in Verbindung steht.

Weiterhin ist es bekannt, insbesondere bei geneigten Fahrbahnabschnitten zum korrekten Abstellen des Kraftfahrzeugs eine Handbremse bzw. eine Fußfeststellbremse anzuziehen, einen Ganghebel eines Schaltgetriebes in einen Vorwärts- oder Rückwärtsgang einzulegen oder bei einem Automatikgetriebe den Wählhebel auf "P" (Parken) zu stellen. Hierbei ist es notwendig, um eine unerwünschte Entleerung der Batterie des Kraftfahrzeugs zu vermeiden, sämtliche Energieverbraucher, wie Audioanlage, Innen- und Außenbeleuchtungen und dergleichen, auszuschalten.

Die DE 40 00 498 A1 beschreibt eine Warnlichteinrichtung für Kraftfahrzeuge, bei der nicht nur, wie an sich bekannt, beim Betätigen des Bremspedals die Bremsleuchten an der Rückseite des Kraftfahrzeugs aufleuchten, sondern auch beim Betätigen einer Handbremse bzw. einer Fußfeststellbremse, um den nachfolgenden Verkehr stets auf Verzögerungen des Kraftfahrzeugs aufmerksam zu machen.

Die DE 100 20 580 A1 offenbart eine Kraftfahrzeug-Fernbedienung, bei der auf dem Fernbedienungsschlüsse, der vom Nutzer mitgeführt wird, eine zusätzliche Anzeige vorgesehen ist, um dem Nutzer anzuzeigen, ob die Zentralverriegelung noch geöffnet oder bereits geschlossen ist, da er dies bei einem Entfernen vom Kraftfahrzeug vergessen haben könnte und er nicht mehr weiß, ob sein Fahrzeug korrekt abgeschlossen ist.

Die DE 198 54 105 A1 zeigt ein Verfahren und eine Anordnung zur Betätigung einer elektrischen Parkbremse, wobei eine derartige Feststell- oder Parkbremse von einem Fahrzeugführer betätigt bzw. gelöst wird und der jeweilige Zustand der Bremse mit einem Anzeigeelement signalisiert wird, um den Fahrer über den Zustand der Bremse zu informieren.

Als nachteilig hierbei ist jedoch anzusehen, dass ein Fahrer bzw. ein Nutzer eines Kraftfahrzeugs, nachdem er sich vom Kraftfahrzeug entfernt hat, am Kraftfahrzeug selbst nicht mehr erkennen kann, ob es ordnungsgemäß abgestellt und geparkt ist oder nicht, da bei größerer Entfernung insbesondere die Verriegelungsknöpfe an den Türen und/oder Klappen nicht mehr erkannt werden können.

Es ist Aufgabe der Erfindung, ein Verfahren zum Betreiben eines Kraftfahrzeugs der eingangs genannten Art zu schaffen, durch das ein korrektes Abstellen oder Parken zuverlässig gewährleistet ist.

Erfindungsgemäß wird die Aufgabe dadurch gelöst, dass vor der Abgabe des Bestätigungssignals von dem Steuergerät eine Überprüfung durchgeführt wird, ob eine Hand- oder Fußfeststellbremse angezogen ist und ob bei einer Automatikschaltung der Wählhebel in Schaltstellung "P" oder bei einem manuellen Getriebe ein Vorwärts- oder Rückwärtsgang eingelegt ist und ob eine Innen- und/oder Außenbeleuchtung ausgeschaltet ist.

Der Kerngedanke der Erfindung besteht darin, alle zum korrekten Abstellen oder Parken eines Kraftfahrzeugs notwendigen Parameter von dem bereits im Kraftfahrzeug vorhanden zentralen Steuergerät zu überwachen.

Sobald das Steuergerät das ordnungsgemäße Parken selbsttätig feststellt, wird von dem Steuergerät ein optisches und/oder akustisches Bestätigungssignal generiert. Selbstverständlich wird dieses Signal erst dann ausgegeben, wenn ein Nutzer das Kraftfahrzeug verlassen, die entsprechende Türe wiederum geschlossen und beispielsweise eine Fernbedienung für die Zentralverriegelung betätigt hat. Dabei können im Rahmen der Erfindung die Bestätigungssignale in an sich beliebiger Weise ausgestaltet sein, beispielsweise in Form einer Sprachmitteilung "Das Auto ist korrekt abgestellt". Ebenso kann ein optisches Signal beispielsweise durch das Aufleuchten einer oder mehrer Leuchtmittel am Kraftfahrzeug ausgegeben werden.

Dabei wird das Bestätigungssignal im Gegensatz zu dem bekannten kurzen Aufblinken beim Schließen einer Zentralverriegelung über einen längeren Zeitraum ausgegeben, um dauerhaft das korrekte Abstellen anzuzeigen. Dies kann so lange andauern, bis sich der Nutzer dem Kraftfahrzeug wieder nähert und die Zentralverriegelung öffnet. Selbstverständlich kann nach dem korrekten Abstellen auch eine Wegfahrsperre und/oder eine Diebstahlschutzeinrichtung selbsttätig aktiviert werden.

Der Vorteil der Erfindung liegt darin, dass alle notwendigen Komponenten bzw. Sensoren bereits im Kraftfahrzeug vorhanden und beispielsweise über an sich bekannte Datenbus-Architekturen miteinander in Verbindung stehen, wodurch zur Implementierung dieser Funktionalität praktisch kein zusätzlicher Aufwand notwendig ist, da die Umsetzung in einfacher Weise hard- und/oder softwaremäßig im zentralen Steuergerät erfolgen kann. Zudem kann sich der Nutzer immer durch einen Blick auf sein Kraftfahrzeug, das auch weit entfernt abgestellt sein kann, vom korrekten Parkvorgang überzeugen.

Um eine unerwünschte Entladung der Bordbatterie des Kraftfahrzeugs zu vermeiden, wird das Bestätigungssignal lediglich über einen vorzugsweise einstellbaren Zeitraum ausgegeben, beispielsweise über eine Zeitdauer von einer oder mehreren Minuten. Nach Ablauf dieser Zeitspanne wird das Bestätigungssignal vom Steuergerät abgeschaltet.

In einfacher Ausgestaltung ist das Bestätigungssignal eine aufleuchtende dritte Bremsleuchte, die vorzugsweise in einem mittleren oberen Bereich der Heckscheibe angeordnet ist. Somit kann ein vom Kraftfahrzeug weit entfernter Nutzer aufgrund der aufleuchtenden dritten Bremsleuchte trotzdem erkennen, dass das Kraftfahrzeug korrekt abgestellt ist. Ebenso ist es möglich, dass zusätzliche seitliche Fahrtrichtungsanzeiger, beispielsweise an den Außenspiegeln, dauerhaft aufleuchten, um zur Seite hin das korrekte Abstellen zu signalisieren. Nach vorne hin könnten die beiden Parklichter diese Funktionalität übernehmen.

Um das korrekte Abstellen des Kraftfahrzeugs festzustellen, werden von dem zentralen Steuergerät insbesondere die folgenden weiteren Parameter überprüft: ob eine Zentralverriegelung geschlossen ist, ob eine Audioanlage ausgeschaltet und schließlich ob alle Fenster, Türen und Klappen sowie gegebenenfalls Schiebedächer bzw. Cabrioverdecke ordnungsgemäß geschlossen sind. Hierfür dienen dem Fachmann bekannte Sensoren, die üblicherweise sowieso in Kraftfahrzeugen vorhanden sind. Wird von einem Nutzer beispielsweise eine Zentralverriegelung verschlossen, so können nacheinander vorstehende Parameter vom Steuergerät abgefragt und beim Erkennen eines korrekten Abstellens kann das Bestätigungssignal ausgegeben werden.

Es versteht sich, dass die vorstehend genannten Merkmale nicht nur in der jeweils angegebenen Kombination, sondern auch in anderen Kombinationen verwendbar sind. Der Rahmen der Erfindung ist nur durch die Ansprüche definiert.

## Patentansprüche

1. Verfahren zum Betreiben eines Kraftfahrzeugs mit einem Steuergerät zur Erzeugung und Einrichtungen zur Abgabe optischer und/oder akustischer Signale, wobei bei einem abgestellten Kraftfahrzeug von dem Steuergerät ein Bestätigungssignal erzeugt wird, **dadurch gekennzeichnet, dass** vor der Abgabe des Bestätigungssignals von dem Steuergerät eine Überprüfung durchgeführt wird, ob eine Hand- oder Fußfeststellbremse angezogen ist und ob bei einer Automatikschaltung der Wählhebel in Schaltstellung "P" oder bei einem manuellen Getriebe ein Vorwärts- oder Rückwärtsgang eingelegt ist und ob eine Innen-und/oder Außenbeleuchtung ausgeschaltet ist.

2. Verfahren nach Anspruch 1, **dadurch gekennzeichnet, dass** das Bestätigungssignal über einen vorzugsweise einstellbaren Zeitraum ausgegeben wird.

3. Verfahren nach Anspruch 1 oder 2, **dadurch gekennzeichnet, dass** das Bestätigungssignal in Form des Aufleuchtens einer dritten Bremsleuchte und/oder seitlicher Fahrtrichtungsanzeiger und/oder der vorderen Parklichter ausgegeben wird.

4. Verfahren nach einem der Ansprüche 1 bis 3, **dadurch gekennzeichnet, dass** von dem Steuergerät eine Überprüfung des Verriegelungszustandes einer Zentralverriegelung und/oder des Ausschaltens einer Audioanlage und/oder des Verschlusszustandes von Fenstern, Türen, Klappen, Schiebedach und Cabrioverdeck durchgeführt wird.

## Claims

1. Method to operate a motor vehicle by means of a aligner control unit for the production of optical and/or acoustical signals and devices for the release of optical and/or acoustical signals, wherein in case of a stoppage of the motor vehicle the control device produces a confirmation signal, **characterized in that** before the control device emits the confirmation signal a check is executed, whether a handbrake or a foot-operated parking brake is activated and whether during the automatic switching of the gear selector lever in the position "P" or in case of a manual gearbox a forward gear or a reverse gear is activated and whether the internal and/or external lights are switched off.

2. Method according to claim 1, **characterized in that** the confirmation signal is emitted during a particular adjustable period of time.

3. Method according to claim 1 or 2, **characterized in that** the confirmation signal is emitted by means of a flashing up of a third brake lamp and/or of a lateral direction indicator lamp and/or of the frontal parking lights.

4. Method according to one the previous claims 1 to 3, **characterized in that** the control device executes a check of the interlocking condition of a central locking system and/or of the switching off of the audio equipment and/or of the blocking condition of the windows, doors, covers, of the retractable roof and the cover of a convertible.

## Revendications

1. Procédé pour l'actionnement d'un véhicule automobile avec un appareil de contrôle pour produire et des dispositifs pour émettre des signaux optiques et/ou acoustiques, un signal de confirmation étant produit par l'appareil de contrôle dans le cas où le véhicule automobile est stationné, **caractérisé en ce que,** avant l'émission du signal de confirmation par l'appareil de contrôle, une vérification est réalisée, pour savoir si un frein de position à main ou à pied est tiré et si, dans le cas d'une commande automatique, le levier de sélection est dans la position de commande « P » ou bien, dans le cas d'une boîte de vitesses manuelle, si un rapport de marche avant ou de marche arrière est embrayé, et si une lumière intérieure et/ou extérieure est éteinte.

2. Procédé selon la revendication 1, **caractérisé en ce que** le signal de confirmation est émis durant un intervalle de temps de préférence réglable.

3. Procédé selon la revendication 1 ou 2, **caractérisé en ce que** le signal de confirmation est émis sous la forme d'un allumage d'un troisième feu de frein et/ou d'indicateurs latéraux de direction et/ou des feux de parking avant.

4. Procédé selon l'une des revendications 1 à 3, **caractérisé en ce que** une vérification de l'état de verrouillage d'un verrouillage centralisé et/ou une vérification de l'extinction d'un équipement audio et/ou une vérification de l'état de fermeture de vitres, de portes, de clapets, d'un toit ouvrant et d'une capote de cabriolet est/sont réalisée(s) par l'appareil de contrôle.
